(19) Europäisches Patentamt
European Patent Office
Office européen des brevets

(11) **EP 4 387 035 A1**

(12) **EUROPEAN PATENT APPLICATION**
published in accordance with Art. 153(4) EPC

(43) Date of publication:
**19.06.2024 Bulletin 2024/25**

(21) Application number: **22871338.4**

(22) Date of filing: **14.03.2022**

(51) International Patent Classification (IPC):
**H02J 3/38** $^{(2006.01)}$

(52) Cooperative Patent Classification (CPC):
**F03D 9/11; F03D 9/25; H02J 3/24; H02J 3/28; H02J 3/38; H02J 3/48**

(86) International application number:
**PCT/CN2022/080619**

(87) International publication number:
**WO 2023/045273 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.09.2021 CN 202111105506**

(71) Applicant: **Beijing Goldwind Science & Creation Windpower Equipment Co. Ltd.**
**Beijing 100176 (CN)**

(72) Inventors:
• **LI, Feng**
  **Beijing 100176 (CN)**
• **ZHOU, Jianhu**
  **Beijing 100176 (CN)**

(74) Representative: **Gulde & Partner**
**Patent- und Rechtsanwaltskanzlei mbB**
**Wallstraße 58/59**
**10179 Berlin (DE)**

(54) **WIND-STORAGE INTEGRATED INERTIA RESPONSE METHOD AND APPARATUS**

(57) A wind turbine and energy storage combined inertia response method and a wind turbine and energy storage combined inertia response apparatus are disclosed. The wind turbine and energy storage combined inertia response method includes: determining, in response to detecting a change in a power grid frequency, an inertia response demand power of a wind turbine and energy storage combined system, wherein the wind turbine and energy storage combined system comprises a wind turbine and an energy storage apparatus connected to the wind turbine; and controlling, based on the determined inertia response demand power and by a mixed feedforward and feedback control manner, the energy storage apparatus and a rotor of the wind turbine to generate a power increment.

```
┌─────────────────────────────────┐
│ Determining, in response to      │
│ detecting a change in a power    │
│ grid frequency, an inertia       │─── S301
│ response demand power ΔP of a    │
│ wind turbine and energy storage  │
│ combined system                  │
└─────────────────────────────────┘
              │
              ▼
┌─────────────────────────────────┐
│ Controlling, based on the        │
│ determined inertia response       │
│ demand power ΔP and by a         │─── S302
│ mixed feedforward and feedback   │
│ control manner, the energy       │
│ storage apparatus and a rotor    │
│ of the wind turbine to generate  │
│ a power increment                │
└─────────────────────────────────┘
```

**Fig. 3**

EP 4 387 035 A1

**Description**

**TECHNICAL FIELD**

The present disclosure generally relates to the technical field of wind power generation, and in particularly to a wind turbine and energy storage combined inertia response method and a wind turbine and energy storage combined inertia response apparatus.

**BACKGROUND**

With the development of wind power technology, penetration of wind power in the power system is increasing, and problems caused by the wind power are emerging. A traditional wind turbine is connected to a power grid using the traditional Maximum Power Point Tracking (MPPT) control strategy and through a low-inertia power electronic device, so that the wind turbine is almost decoupled from the power grid, the inertia of the system is reduced, and a wind farm hardly responds to frequency fluctuations in the power grid. On the other hand, inherent characteristics such as randomness and volatility of the wind power also threaten the safe and stable operation of the power grid.

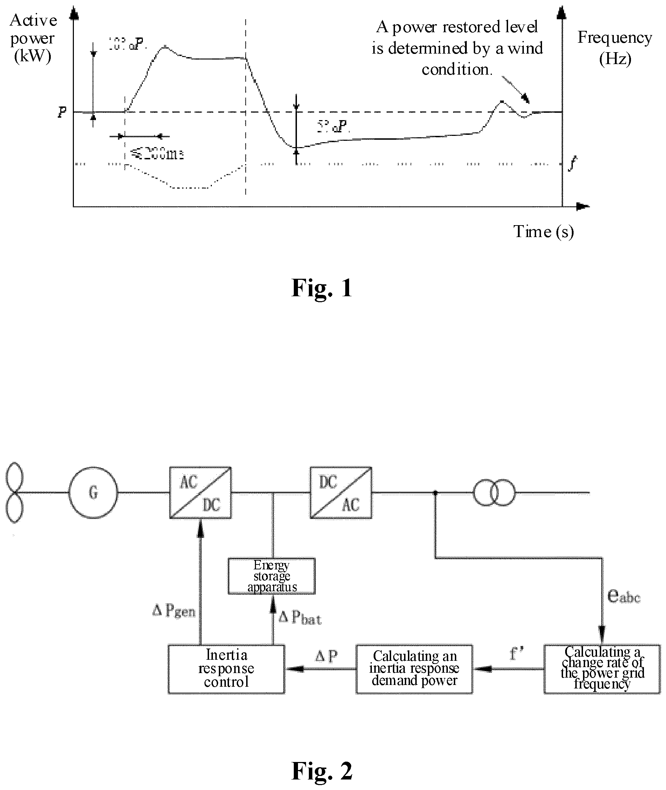

In recent years, releasing kinetic energy of a rotor using a rotor of the wind turbine has been proposed for performing the inertia response to maintain a stable frequency of the power system. Fig. 1 illustrates a diagram showing an existing inertia response process. In Fig. 1, $f$ represents a power grid frequency, P represents a real-time grid-connected frequency of the wind turbine, $P_n$ represents a rated power of the wind turbine, the dashed line represents the power grid frequency and the solid line represents the real-time grid-connected frequency. In an initial phase, the power grid frequency $f$ is maintained at a rated frequency $f_n$. The power grid frequency is ramped down thereafter. Once the power grid frequency changes, a frequency change rate may be determined, and an inertia response demand power $\Delta P$ is further determined (typically defining $\Delta P \leq 10\% P_n$). Then, $\Delta P$ may be used as a control target to control a rotor, a power of the rotor changes accordingly and is transmitted to a grid side through a converter, which reflects that the real-time grid-connected power P rises gradually and reaches to a steady state finally. In general, a time interval from the start of the frequency change to the completion of the P response is not allowed to exceed a fixed value (e.g. 200ms). When the power grid frequency drops to a certain level, it does not change anymore and then returns to the rated frequency. At this time, the inertia response demand power $\Delta P$ is cleared, and the real-time grid-connected power is restored.

However, the existing inertia response method as described above entirely relies on the kinetic energy of the rotor, and when the inertia demand is great, an impact on a wind turbine load will be great. In addition, since the maximum rotor kinetic energy is limited, a problem of insufficient response occurs when the inertia demand is great. In addition, the existing inertia response method is performed in an open-loop fixed and given manner, the grid-connected power cannot be stabilized when a wind speed fluctuates, and a control deviation exists during the power being in a steady state.

**SUMMARY**

Embodiments of the present disclosure provide a wind turbine and energy storage combined inertia response method and a wind turbine and energy storage combined inertia response apparatus, the impact on the load caused by the inertia response can be reduced, and the inertia response ability can be improved.

In one general aspect, there is provided a wind turbine and energy storage combined inertia response method, including: determining, in response to detecting a change in a power grid frequency, an inertia response demand power of a wind turbine and energy storage combined system, wherein the wind turbine and energy storage combined system includes a wind turbine and an energy storage apparatus connected to the wind turbine; and controlling, based on the determined inertia response demand power and by a mixed feedforward and feedback control manner, the energy storage apparatus and a rotor of the wind turbine to generate a power increment, so as to satisfy the inertia response demand power.

In another general aspect, there is provided a wind turbine and energy storage combined inertia response apparatus, including: an inertia response demand power determination unit configured to: determine, in response to detecting a change in a power grid frequency, an inertia response demand power of a wind turbine and energy storage combined system, wherein the wind turbine and energy storage combined system includes a wind turbine and an energy storage apparatus connected to the wind turbine; and an energy storage and rotor control unit configured to: control, based on the determined inertia response demand power and by a mixed feedforward and feedback control manner, the energy storage apparatus and a rotor of the wind turbine to generate a power increment, so as to satisfy the inertia response demand power.

In another general aspect, there is provided a computer-readable storage medium storing a computer program that, when executed by a processor, implements the wind turbine and energy storage combined inertia response method e as described above.

In another general aspect, there is provided a controller, including: a processor; and a memory storing a computer program that, when executed by the processor, implements the wind turbine and energy storage combined inertia response method as described above.

In another general aspect, there is provided a wind turbine and energy storage combined system, including: a wind turbine; an energy storage apparatus connected to the wind turbine; the wind turbine and energy storage combined inertia response apparatus as described above or the controller as described above.

In the wind turbine and energy storage combined inertia response method and wind turbine and energy storage combined inertia response apparatus according to the embodiments of the present disclosure, the inertia response is performed preferentially using the energy storage apparatus without the involvement of the rotor, and thus the impact on the load of the wind turbine caused by the rotor performing the inertia response is eliminated. On the other hand, when the inertia response demand is great, both of the energy storage apparatus and the rotor may perform the inertia response, so that the inertia response supporting ability is improved. In addition, both the energy storage apparatus and the rotor are controlled by using the mixed feedforward and feedback control manner in the process of the inertia response, so that a speed of the inertia response can be increased and the stability of the inertia response can be guaranteed.

## BRIEF DESCRIPTION OF THE DRAWINGS

The above and other purposes and features of embodiments of the present disclosure will become more apparent by the following detailed description in conjunction with the accompanying drawings showing embodiments, wherein:

Fig. 1 illustrates a diagram showing an existing inertia response process;
Fig. 2 illustrates a diagram showing a principle of a wind turbine and energy storage combined inertia response method according to an embodiment of the present disclosure;
Fig. 3 illustrates a flow chart of a wind turbine and energy storage combined inertia response method according to an embodiment of the present disclosure;
Fig. 4 illustrates a diagram of controlling an energy storage apparatus and a rotor by a mixed feedforward and feedback control manner;
Fig. 5 illustrates a block diagram of a wind turbine and energy storage combined inertia response apparatus according to an embodiment of the present disclosure;
Fig. 6 illustrates a block diagram of a controller according to an embodiment of the present disclosure.

## DETAILED DESCRIPTION

Specific implementations are provided below to assist a reader in obtaining a thorough understanding of a method, an apparatus and/or a system described herein. However, various changes, modifications, and equivalents of the method, the apparatus, and/or the system described herein will be apparent after disclosure of the present application is understood. For example, sequences of operations described herein are merely examples, and are not limited to those sequences set forth herein, but, in addition to operations that must be executed in a particular sequence, may be changed as will be apparent after the disclosure of the present application is understood. Moreover, for the sake of clarity and brevity, descriptions of features known in the art may be omitted.

The features described herein may be implemented in various forms and should not be construed as limited to examples described herein. Rather, examples described herein have been provided to illustrate only some of many feasible ways used for implementing the method, the apparatus, and/or the system described herein, and the many feasible ways will be apparent after the disclosure of the present application is understood.

As used herein, terms "and/or" include any one or two or more combinations of associated listed items.

Although terms such as "first", "second", and "third" may be used herein to describe various members, components, areas, layers, or parts, these members, components, areas, layers, or parts should not be limited by these terms. Rather, these terms are only used to distinguish one member, component, area, layer or part from another member, component, area, layer or part. Therefore, a first member, a first component, a first area, a first layer, or a first part referred to in the examples described herein may also be referred to as a second member, a second component, a second area, a second layer, or a second part without departing from the teachings of the examples.

In the specification, when an element (e.g., a layer, a layer or a base) is described as being "on another element", "connected to" or "bonded to" another element, the element may be directly "on", "connected to" or "bonded to" the other element, or there may be one or more other elements in between. Rather, when an element is referred to as being "directly on", "directly connected to" or "directly bonded to" another element, there may be no other elements in between.

A terminology used herein is only used for describing various examples and is not used for limiting the disclosure. Unless otherwise clearly indicated by the context, a singular form is intended to include a plural form. Terms "comprising", "including", and "having" show the presence of stated features, amounts, operations, components, elements, and/or combinations thereof, but do not preclude the presence or addition of one or more other features, amounts, operations, components, elements, and/or combinations thereof.

Unless otherwise defined, all terms (including technical and scientific terms) used herein have the same meaning as commonly understood by a person skilled in the art to which this disclosure belongs after the person understands the present disclosure. Unless otherwise expressly defined herein, terms (such as those defined in commonly used dictionaries) should be construed as having a meaning that is consistent with their meaning in the context of the related art and the present disclosure, and will not be construed in an idealized or overly formal sense.

Further, in the description of the examples, detailed descriptions of well-known related structures or functions will be omitted when it is considered that such detailed descriptions would obscure the disclosure.

The principle of a wind turbine and energy storage combined inertia response method according to an embodiment of the present disclosure is explained below.

Fig. 2 illustrates a diagram showing a principle of a wind turbine and energy storage combined inertia response method according to an embodiment of the present disclosure

In the wind turbine and energy storage combined inertia response method according to the embodiment of the disclosure, the inertia response is performed by the wind turbine and energy storage combined system, so that the impact on the loads caused by the inertia response can be reduce, and the inertia response ability can be improved. In Fig. 2, an energy storage apparatus is connected to a DC bus of a converter, while the energy storage apparatus may be connected to other locations as well, which is not limited in the disclosure.

Referring to Fig. 2, a power grid voltage e_abc may be input to a frequency detection module to detect a power grid frequency $f$, and an inertia response demand power $\Delta P$ may be calculated based on a change rate of the power grid frequency $f$. Herein, the power grid frequency $f$ may be detected from the power grid voltage e_abc by various existing methods to determine the change rate of the power grid frequency, which is not limited in any way in the present disclosure. A method for calculating the inertia response demand power $\Delta P$ will be described in detail later. The inertia response demand power $\Delta P$ may then be decomposed into two power increments, $\Delta Pgen$ and $\Delta Pbat$. Herein, $\Delta Pgen$ represents a power increment generated by controlling the rotor of the wind turbine, and $\Delta Pbat$ represents a power increment generated by controlling the energy storage apparatus. The rotor and the energy storage apparatus may be controlled by using $\Delta Pgen$ and $\Delta Pbat$ as a rotor control target and an energy storage control target by a rotor control system and an energy storage control system to generate respective power increments.

According to the embodiments of the present disclosure, the inertia response demand power is satisfied using the rotor and the energy storage apparatus. In the process of the inertia response, the inertia response is performed preferentially using the storage apparatus without the involvement of the rotor to eliminate the impact on the loads of the wind turbine caused by the rotor performing the inertia response. On the other hand, when the inertia response demand is great, a supplementary inertia response may be performed by the rotor to improve the inertia response supporting ability. The wind turbine and energy storage combined inertia response method according to the embodiment of the present disclosure is described in detail below.

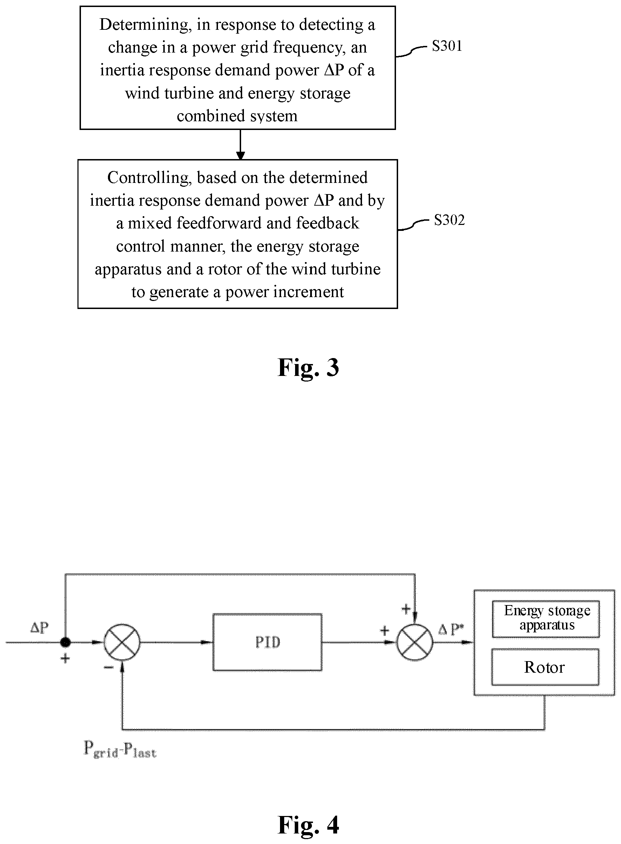

Fig. 3 illustrates a flow chart of a wind turbine and energy storage combined inertia response method according to an embodiment of the present disclosure.

Referring to Fig. 3, in step S301, the inertia response demand power $\Delta P$ of a wind turbine and energy storage combined system is determined in response to detecting a change in a power grid frequency. As described above, the wind turbine and energy storage combined system includes a wind turbine and an energy storage apparatus connected to the wind turbine. When the change in the power grid frequency is detected, a change rate $df/dt$ of the power grid frequency (i.e. a frequency derivative $f$) may be calculated, and the inertia response demand power $\Delta P$ of the wind turbine and energy storage combined system is determined based on the change rate $df/dt$ of the power grid frequency, a power grid rated frequency $f_n$, an inertia constant $T_J$ of the wind turbine and grid-connected rated power $P_n$. Specifically, the inertia response demand power $\Delta P$ can be calculated by the following Equation (1).

$$\Delta P = -\frac{T_J}{f_n}\frac{df}{dt}P_n \qquad (1)$$

Next, in step S302, the energy storage apparatus and a rotor of the wind turbine may be controlled based on the determined inertia response demand power $\Delta P$ and by a mixed feedforward and feedback control manner to generate a power increment, so as to satisfy the inertia response demand power $\Delta P$.

Fig. 4 illustrates a diagram of controlling an energy storage apparatus and a rotor by a mixed feedforward and feedback control manner.

As shown in Fig. 4, a first control component may be calculated through a proportional-integral-derivative (PID) operation by using the determined inertia response demand power $\Delta P$ as a given value, and using a difference between a real-time grid-connected power value $P_{grid}$ of the wind turbine and a grid-connected power value $P_{last}$ when the inertia response demand power of the wind turbine and energy storage combined system is determined as a feedback value, and then a sum of a feedforward amount and the first control component as an energy storage and rotor hybrid control target $\Delta P^*$ may be calculated by using the determined inertia response demand power as the feedforward amount $\Delta P$, and finally the energy storage apparatus and the rotor may be controlled based on the calculated energy storage and rotor hybrid control target $\Delta P^*$ to generate the power increment. Herein, the real-time grid-connected power may be determined based on power and a power increment at a side of a converter of the wind turbine. For example, a sum of the power value and the power increment at the side of the converter of the wind turbine may be determined as the real-time grid-connected power.

In this way, by a feedback control, a closed-loop control (including a feedforward control and the feedback control) of the energy storage apparatus and the rotor is achieved, a speed of the response is increased and the stability of the response is guaranteed.

Herein, when controlling the energy storage apparatus, a respective power increment may be generated by controlling the energy storage apparatus to absorb electric energy or release electric energy stored, and when controlling the rotor, a respective power increment may be generated by controlling electromagnetic torque of the rotor. The control manner of absorbing/releasing electric energy and the control manner of electromagnetic torque described above are known to those skilled in the art, and thus will not be repeated.

As described above, in the process of the inertia response , the inertia response is performed preferentially using the storage apparatus. Therefore, under a condition that the calculated energy storage and rotor hybrid control target $\Delta P^*$ is less than or equal to a maximum power increment $\Delta Pbat\_max$ that the energy storage apparatus can provide, only the energy storage apparatus may be controlled to generate the power increment $\Delta Pbat$ based on the calculated energy storage and rotor hybrid control target $\Delta P^*$.

Under a condition that the calculated energy storage and rotor hybrid control target $\Delta P^*$ is greater than the maximum power increment $\Delta Pbat\_max$ that the energy storage apparatus can provide and less than or equal to a sum of the maximum power increment $\Delta Pbat\_max$ that the energy storage apparatus can provide and a maximum power increment $\Delta Pgen\_max$ that the rotor can provide, the energy storage apparatus may be controlled using the maximum power increment $\Delta Pbat\_max$ that the energy storage apparatus can provide as an energy storage apparatus control target and the rotor may be controlled using a difference between the energy storage and rotor hybrid control target $\Delta P^*$ and the maximum power increment $\Delta Pbat\_max$ that the energy storage apparatus can provide as a rotor control target to generate the power increment. Under this condition, the power increment may be sum of the power increment $\Delta Pbat$ generated by controlling the energy storage apparatus and the power increment $\Delta Pgen$ generated by controlling the rotor.

Under a condition that the calculated energy storage and rotor hybrid control target $\Delta P^*$ is greater than the sum of the maximum power increment $\Delta Pbat\_max$ that the energy storage apparatus can provide and the maximum power increment $\Delta Pgen\_max$ that the rotor can provide, the energy storage apparatus may be controlled using the maximum power increment $\Delta Pbat\_max$ that the energy storage apparatus can provide as the energy storage apparatus control target and the rotor may be controlled using the maximum power increment $\Delta Pgen\_max$ that the rotor can provide to generate the power increment. As described above, under this condition, the power increment may be sum of the power increment $\Delta Pbat$ generated by controlling the energy storage apparatus and the power increment $\Delta Pgen$ generated by controlling the rotor.

In the wind turbine and energy storage combined inertia response method according to the embodiment of the disclosure, the inertia response is performed preferentially using the storage apparatus without the involvement of the rotor, and thus the impact on the loads of the wind turbine caused by the rotor performing the inertia response is eliminated. On the other hand, when the inertia response demand is great, both of the energy storage apparatus and the rotor may perform the inertia response, so that the inertia response supporting ability is improved. In addition, the energy storage apparatus and the rotor are controlled using the mixed feedforward and feedback control manner in the process of the inertia response, so that a speed of the inertia response can be increased and the stability of the inertia response can be guaranteed.

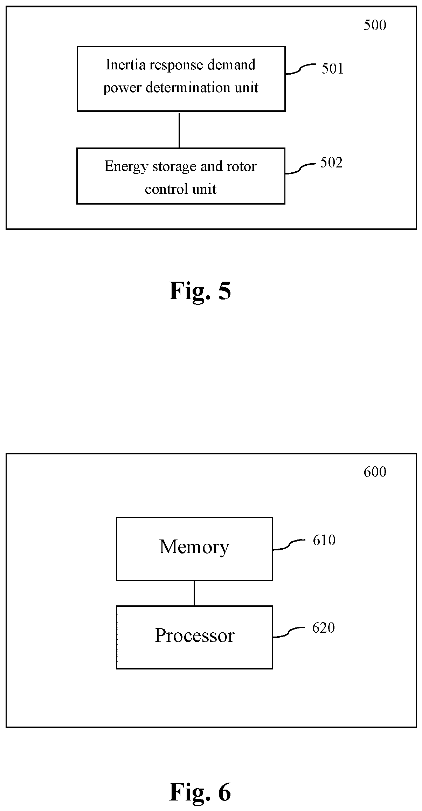

Fig. 5 illustrates a block diagram of a wind turbine and energy storage combined inertia response apparatus according to an embodiment of the present disclosure. As an example, the wind turbine and energy storage combined inertia response apparatus according to the embodiment of the present disclosure may be arranged in a controller of the converter, but is not limited herein. For example, the wind turbine and energy storage combined inertia response apparatus according to the embodiment of the present disclosure may be arranged in a main controller or a dedicated controller of the wind turbine. Optionally, the wind turbine and energy storage combined inertia response apparatus according to the embodiment of the present disclosure may be implemented as a separate part in the wind turbine and energy storage combined system.

Referring to Fig. 5, an apparatus 500 for a wind turbine and energy storage combined inertia response according to an embodiment of the present disclosure may include an inertia response demand power determination unit 501 and an energy storage and rotor control unit 502.

The inertia response demand power determination unit 501 may determine, in response to detecting a change in a power grid frequency, an inertia response demand power of a wind turbine and energy storage combined system. As described above, the wind turbine and energy storage combined system includes a wind turbine and an energy storage apparatus connected to the wind turbine. The inertia response demand power determination unit 501 may determine the inertia response demand power of the wind turbine and energy storage combined system based on a change rate of the power grid frequency, a power grid rated frequency, an inertia constant of the wind turbine and grid-connected rated power. Specifically, the inertia response demand power determination unit 501 may calculate the inertia response demand power by Equation (1) as described above.

The energy storage and rotor control unit 502 may control the energy storage apparatus and a rotor of the wind turbine based on the determined inertia response demand power and by a mixed feedforward and feedback control manner to generate a power increment, so as to satisfy the inertia response demand power. Specifically, the energy storage and rotor control unit 502 may calculate a first control component through a proportional-integral-derivative operation by using the determined inertia response demand power as a given value, and using a difference between a real-time grid-connected power value of the wind turbine and a grid-connected power value when determining the inertia response demand power of the wind turbine and energy storage combined system as a feedback value, and then calculate a sum of a feedforward amount and the first control component as an energy storage and rotor hybrid control target by using the determined inertia response demand power as the feedforward amount, and finally control the energy storage apparatus and the rotor based on the calculated energy storage and rotor hybrid control target to generate the power increment. Herein, the real-time grid-connected power value may be determined based on power and a power increment at a side of a converter of the wind turbine.

Furthermore, the energy storage and rotor control unit 502 may control only the energy storage apparatus to generate the power increment based on the calculated energy storage and rotor hybrid control target in response to the calculated energy storage and rotor hybrid control target being less than or equal to a maximum power increment that the energy storage apparatus can provide. Alternatively, the energy storage and rotor control unit 502 may control the energy storage apparatus with the maximum power increment that the energy storage apparatus can provide as the energy storage apparatus control target and control the rotor with the difference between the energy storage rotor combined control target and the maximum power increment that the energy storage apparatus can provide as the rotor control target to generate a power increment in response to the calculated energy storage rotor combined control target being greater than the maximum power increment that the energy storage apparatus can provide and less than or equal to the sum of the maximum power increment that the energy storage apparatus can provide and the maximum power increment that the rotor can provide. In addition, the energy storage and rotor control unit 502 may control the energy storage apparatus using the maximum power increment that the energy storage apparatus can provide as the energy storage apparatus control target and control the rotor using the maximum power increment that the rotor can provide to generate the power increment in response to the calculated energy storage and rotor hybrid control target being greater than the sum of the maximum power increment that the energy storage apparatus can provide and the maximum power increment that the rotor can provide.

Fig. 6 illustrates a block diagram of a controller according to an embodiment of the present disclosure.

Referring to Fig. 6, a controller 600 according to an embodiment of the present disclosure may be implemented in the wind turbine and energy storage combined system, for example, as a main controller of the wind turbine. The controller 600 according to the embodiment of the present disclosure may include a processor 610 and a memory 620. The processor 610 may include, but is not limited to, a central processing unit (CPU), a digital signal processor (DSP), a microcomputer, a field programmable gate array (FPGA), a system-on-chip (SoC), a microprocessor, an application specific integrated circuit (ASIC), and the like. The memory 620 may store a computer program to be executed by the processor 610. The memory 620 may include a high speed random access memory and/or a non-volatile computer readable storage medium. When the processor 610 executes the computer program stored in the memory 620, the wind turbine and energy storage combined inertia response method as described above can be implemented.

Optionally, the controller 600 may communicate with other various components in the wind turbine and energy storage combined system or other apparatuses in the wind farm in a wired/wireless communication. In addition, the controller 600 may communicate with apparatuses external to the wind farm in a wired/wireless communication.

The wind turbine and energy storage combined inertia response method according to the embodiment of the present disclosure may be programmed as a computer program and stored on a computer-readable storage medium. When the computer program is executed by a processor, the wind turbine and energy storage combined inertia response method as described above may be implemented. Examples of the computer readable storage media include: a read only memory (ROM), a random access programmable read only memory (PROM), an electrically erasable programmable read only memory (EEPROM), a random access memory (RAM), a dynamic random access memory (DRAM), a static random access memory (SRAM), a flash memory, a non-volatile memory, CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, a blu-ray or optical disk memory, a hard disk drive (HDD), a solid state hard disk (SSD), a card memory (such as a multi-media card, a secure digital (SD) card or a high speed digital (XD) card), a magnetic tape, a floppy disk, a magneto-optical data storage, an optical data storage, a hard disk, a solid state disk and any other apparatus, and the any other apparatus is configured to store a computer program and any associated data, data file and data structure in a non-transitory manner and provide the computer program and the any associated data, data file and data structure to a processor or a computer, so that the processor or the computer can execute the computer program. In one example, the computer program and the any associated data, data file and data structure are distributed over networked computer systems, so that the computer program and the any associated data, data file and data structure are stored, accessed and executed in a distributed manner by one or more processors or computers.

In the wind turbine and energy storage combined inertia response method and wind turbine and energy storage combined inertia response apparatus according to the embodiments of the disclosure, the inertia response is performed preferentially using the storage apparatus without the involvement of the rotor, and thus the impact on the loads of the wind turbine caused by the rotor performing the inertia response is eliminated. On the other hand, when the inertia response demand is great, both of the energy storage apparatus and the rotor may perform the inertia response, so that the inertia response supporting ability is improved. In addition, the energy storage apparatus and the rotor are controlled using the mixed feedforward and feedback control manner in the process of the inertia response, so that a speed of the inertia response can be increased and the stability of the inertia response can be guaranteed.

Although some of the embodiments of the present disclosure have been illustrated and described, those skilled in the art will understand that modifications may be made to these embodiments without departing from the scope of the principle and the gist of the present disclosure defined by the claims and their equivalents.

## Claims

1. A wind turbine and energy storage combined inertia response method, comprising:

   determining, in response to detecting a change in a power grid frequency, an inertia response demand power of a wind turbine and energy storage combined system, wherein the wind turbine and energy storage combined system comprises a wind turbine and an energy storage apparatus connected to the wind turbine; and
   controlling, based on the determined inertia response demand power and by a mixed feedforward and feedback control manner, the energy storage apparatus and a rotor of the wind turbine to generate a power increment, so as to satisfy the inertia response demand power.

2. The wind turbine and energy storage combined inertia response method of claim 1, wherein the step of determining the inertia response demand power of the wind turbine and energy storage combined system comprises:
   determining the inertia response demand power of the wind turbine and energy storage combined system based on a change rate of the power grid frequency, a power grid rated frequency, an inertia constant of the wind turbine and a grid-connected rated power.

3. The wind turbine and energy storage combined inertia response method of claim 1, wherein the step of controlling, based on the determined inertia response demand power and by the mixed feedforward and feedback control manner, the energy storage apparatus and the rotor of the wind turbine comprises:

   calculating a first control component through a proportional-integral-derivative operation, by using the determined inertia response demand power as a given value and using a difference between a real-time grid-connected power value of the wind turbine and a grid-connected power value when determining the inertia response demand power of the wind turbine and energy storage combined system as a feedback value;
   calculating a sum of a feedforward amount and the first control component as an energy storage and rotor hybrid control target by using the determined inertia response demand power as the feedforward amount; and
   controlling, based on the calculated energy storage and rotor hybrid control target, the energy storage apparatus and the rotor to generate the power increment.

4. The wind turbine and energy storage combined inertia response method of claim 3, wherein the step of controlling, based on the calculated energy storage and rotor hybrid control target, the energy storage apparatus and the rotor comprises:

   in response to the calculated energy storage and rotor hybrid control target being less than or equal to a maximum power increment that the energy storage apparatus can provide, controlling only the energy storage apparatus based on the calculated energy storage and rotor hybrid control target, to generate the power increment;

in response to the calculated energy storage and rotor hybrid control target being greater than the maximum power increment that the energy storage apparatus can provide and less than or equal to a sum of the maximum power increment that the energy storage apparatus can provide and a maximum power increment that the rotor can provide, controlling the energy storage apparatus by using the maximum power increment that the energy storage apparatus can provide as an energy storage apparatus control target, and controlling the rotor by using a difference between the energy storage and rotor hybrid control target and the maximum power increment that the energy storage apparatus can provide as a rotor control target, to generate the power increment; and/or

in response to the calculated energy storage and rotor hybrid control target being greater than the sum of the maximum power increment that the energy storage apparatus can provide and the maximum power increment that the rotor can provide, controlling the energy storage apparatus by using the maximum power increment that the energy storage apparatus can provide as the energy storage apparatus control target, and controlling the rotor by using the maximum power increment that the rotor can provide as the rotor control target, to generate the power increment.

5. A wind turbine and energy storage combined inertia response apparatus, comprising:

an inertia response demand power determination unit configured to: determine, in response to detecting a change in a power grid frequency, an inertia response demand power of a wind turbine and energy storage combined system, wherein the wind turbine and energy storage combined system comprises a wind turbine and an energy storage apparatus connected to the wind turbine; and

an energy storage and rotor control unit configured to: control, based on the determined inertia response demand power and by a mixed feedforward and feedback control manner, the energy storage apparatus and a rotor of the wind turbine to generate a power increment, so as to satisfy the inertia response demand power.

6. The wind turbine and energy storage combined inertia response apparatus of claim 5, wherein the energy storage and rotor control unit is configured to:

calculate a first control component through a proportional-integral-derivative operation, by using the determined inertia response demand power as a given value and using a difference between a real-time grid-connected power value of the wind turbine and a grid-connected power value when determining the inertia response demand power of the wind turbine and energy storage combined system as a feedback value;

calculate a sum of a feedforward amount and the first control component as an energy storage and rotor hybrid control target by using the determined inertia response demand power as the feedforward amount; and

control, based on the calculated energy storage and rotor hybrid control target, the energy storage apparatus and the rotor to generate the power increment.

7. The wind turbine and energy storage combined inertia response apparatus of claim 6, wherein the energy storage and rotor control unit is further configured to:

in response to the calculated energy storage and rotor hybrid control target being less than or equal to a maximum power increment that the energy storage apparatus can provide, control only the energy storage apparatus based on the calculated energy storage and rotor hybrid control target, to generate the power increment;

in response to the calculated energy storage and rotor hybrid control target being greater than the maximum power increment that the energy storage apparatus can provide and less than or equal to a sum of the maximum power increment that the energy storage apparatus can provide and a maximum power increment that the rotor can provide, control the energy storage apparatus by using the maximum power increment that the energy storage apparatus can provide as an energy storage apparatus control target, and control the rotor by using a difference between the energy storage and rotor hybrid control target and the maximum power increment that the energy storage apparatus can provide as a rotor control target, to generate the power increment; and/or

in response to the calculated energy storage and rotor hybrid control target being greater than the sum of the maximum power increment that the energy storage apparatus can provide and the maximum power increment that the rotor can provide, control the energy storage apparatus by using the maximum power increment that the energy storage apparatus can provide as the energy storage apparatus control target, and control the rotor by using the maximum power increment that the rotor can provide as the rotor control target, to generate the power increment.

8. The wind turbine and energy storage combined inertia response apparatus of claim 7, wherein the wind turbine and energy storage combined inertia response apparatus is arranged in a converter of the wind turbine.

9. A computer-readable storage medium storing a computer program that, when executed by a processor, implements the wind turbine and energy storage combined inertia response method of any of claims 1 to 4.

10. A controller comprising: a processor; and a memory storing a computer program that, when executed by the processor, implements the wind turbine and energy storage combined inertia response method of any of claims 1 to 4.

11. A wind turbine and energy storage combined system comprising:

   a wind turbine;
   an energy storage apparatus connected to the wind turbine; and
   the wind turbine and energy storage combined inertia response apparatus of any of claims 5 to 8 or the controller of claim 10.

**Fig. 1**

**Fig. 2**

| Determining, in response to detecting a change in a power grid frequency, an inertia response demand power ΔP of a wind turbine and energy storage combined system | S301 |

| Controlling, based on the determined inertia response demand power ΔP and by a mixed feedforward and feedback control manner, the energy storage apparatus and a rotor of the wind turbine to generate a power increment | S302 |

**Fig. 3**

$P_{grid}-P_{last}$

**Fig. 4**

500

Inertia response demand
power determination unit — 501

Energy storage and rotor
control unit — 502

**Fig. 5**

600

Memory — 610

Processor — 620

**Fig. 6**

## INTERNATIONAL SEARCH REPORT

| | International application No. |
| --- | --- |
| | **PCT/CN2022/080619** |

**A. CLASSIFICATION OF SUBJECT MATTER**

H02J 3/38(2006.01)i

According to International Patent Classification (IPC) or to both national classification and IPC

**B. FIELDS SEARCHED**

Minimum documentation searched (classification system followed by classification symbols)

H02J;F03D

Documentation searched other than minimum documentation to the extent that such documents are included in the fields searched

Electronic data base consulted during the international search (name of data base and, where practicable, search terms used)

WPABSC; CNTXT; CJFD; ENTXTC; DWPI; VEN; ENTXT; CNKI; IEEE: 风, 储能, 电池, 功率, 频率, 惯量, 响应, 转子, wind, energy storage, battery, power, frequency, inertia, response, rotor

**C. DOCUMENTS CONSIDERED TO BE RELEVANT**

| Category* | Citation of document, with indication, where appropriate, of the relevant passages | Relevant to claim No. |
| --- | --- | --- |
| X | CN 108493960 A (CHINA DATANG CORPORATION, CENTRAL-CHINA ELECTRIC POWER TEST RESEARCH INSTITUTE) 04 September 2018 (2018-09-04) description, paragraphs 30-38, and figures 1-2 | 1-2, 5, 9-11 |
| A | CN 106505623 A (HOHAI UNIVERSITY et al.) 15 March 2017 (2017-03-15) description, paragraphs 37-50, and figures 1-4 | 1-11 |
| A | CN 113162073 A (SHANDONG UNIVERSITY et al.) 23 July 2021 (2021-07-23) entire document | 1-11 |
| A | CN 107959304 A (JINAN POWER SUPPLY COMPANY OF STATE GRID SHANDONG ELECTRIC POWER COMPANY et al.) 24 April 2018 (2018-04-24) entire document | 1-11 |
| A | US 2017298904 A1 (SIEMENS AKTIENGESELLSCHAFT) 19 October 2017 (2017-10-19) entire document | 1-11 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **21 May 2022** | **02 June 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/080619**

| Patent document cited in search report | | | Publication date (day/month/year) | Patent family member(s) | | | Publication date (day/month/year) |
|---|---|---|---|---|---|---|---|
| CN | 108493960 | A | 04 September 2018 | None | | | |
| CN | 106505623 | A | 15 March 2017 | CN | 106505623 | B | 08 January 2019 |
| CN | 113162073 | A | 23 July 2021 | None | | | |
| CN | 107959304 | A | 24 April 2018 | CN | 107959304 | B | 02 November 2021 |
| US | 2017298904 | A1 | 19 October 2017 | None | | | |

Form PCT/ISA/210 (patent family annex) (January 2015)